# EUROPEAN PATENT APPLICATION

(11) **EP 1 821 273 A2**
(43) Date of publication of application: **22.08.2007**
(21) Application number: 07250508.4
(22) Date of filing: 08.02.2007
(51) Int. Cl.: G09F 27/00, G09F 13/04

(54) **Refrigerated case advertising system and method**

(30) Priority: 21.02.2006 US 358545
(71) Applicant: Hussmann Corporation, Bridgeton Missouri 63044-2483 (US)
(72) Inventor: Hostetler, Brian J., Chesterfield, MO 63005 (US); Roche, John M., Ballwin, MO 63021 (US)
(74) Representative: Holmes, Matthew Peter

(57) **Abstract**

A refrigerated merchandiser for maintaining food product at a desired temperature. The refrigerated merchandiser includes a case having a product display area adapted to support and display the food product to be visible from the front of the case and a refrigeration system operable to supply refrigerated air to the product display area and adapted to maintain the food product at the desired temperature. The case further includes at least one graphic display panel coupled to the case and a controller in electrical communication with the graphic display panel. The controller delivers a signal to the graphic display panel which displays video advertising based on the signal received from the controller.

## Description

### BACKGROUND

The present invention relates to an advertising system for a refrigerated merchandiser. More particularly, the present invention relates to a refrigerated merchandiser that includes a controller which allows a user to modify the advertising system.

Static advertising exists on shopping carts and on display cards attached to shelving. Generally, the static advertising must be manually modified at the advertising location and provides limited advertising flexibility. The static placards used must be frequently updated with new placards to keep up with current promotions and consumer interests. The placards that are replaced are either stored for potential future use, which takes up storage space, or discarded.

Advertising systems also incorporate monitors near checkout lanes or displays at the end of aisles or walkways to display advertising. These systems necessitate local control at each individual store. A retailer typically purchases the merchandiser containing the product to be sold and the system that provides the desired method of advertising, which can pose significant costs to the retailer. When video advertising is desired or required, the retailer must purchase and maintain expensive equipment. Typically, the advertising system requires local control to modify the advertisement displayed on the system.

### SUMMARY

The invention provides an advertising system for a refrigerated merchandiser used by a retailer to sell food product. Advertising space is displayed on graphic display panels attached to the refrigerated merchandiser. The invention provides a system to control the advertising space locally or from a remote location. Additionally, the invention provides a method of advertising on the refrigerated merchandiser.

In one embodiment, the invention provides a refrigerated merchandiser for maintaining food product at a desired temperature. The refrigerated merchandiser includes a case, a refrigeration system, at least one graphic display panel coupled to the case, and a controller in electrical communication with the graphic display panel. The case includes a product display area adapted to support and display the food product to be visible from the front of the case. The refrigeration system supplies refrigerated air to the product display area maintains the food product at the desired temperature. The controller delivers a signal to the graphic display panel and the graphic display panel displays video advertising based on the signal received from the controller.

In another embodiment the invention provides a method of providing advertising on a refrigerated merchandiser located at a retailer. The method includes providing a refrigerated merchandiser having at least one graphic display panel and a controller in electrical communication with the graphic display panel, providing network service in electrical communication with the controller, delivering video advertising from the network service to the controller, delivering the video advertising from the controller to the graphic display panel, and displaying the video advertising on the graphic display panel.

In yet another embodiment the invention provides a method of providing advertising on a refrigerated merchandiser located at a retailer. The method includes providing a refrigerated merchandiser having advertising space, charging a fee from the case manufacturer to at least one advertiser to advertise on the advertising space, displaying the advertising on the advertising space, and reducing the purchase cost of the refrigerated merchandiser to the retailer by an amount based on the fee charged to the at least one advertiser.

Other aspects of the invention will become apparent by consideration of the detailed description and accompanying drawings.

### BRIEF DESCRIPTION OF THE DRAWINGS

Fig. 1 is a perspective view of a refrigerated merchandiser of the present invention illustrating graphic display panels displaying static advertisements;

Fig. 2 is another perspective view of the refrigerated merchandiser of Fig. 1, illustrating graphic display panels displaying active advertisements;

Fig. 3 is a section view of the refrigerated merchandiser of Fig. 2, illustrating a canopy and a light source; and

Fig. 4 is a perspective view of the refrigerated merchandiser of Fig. 2, including a schematic view of a control system.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

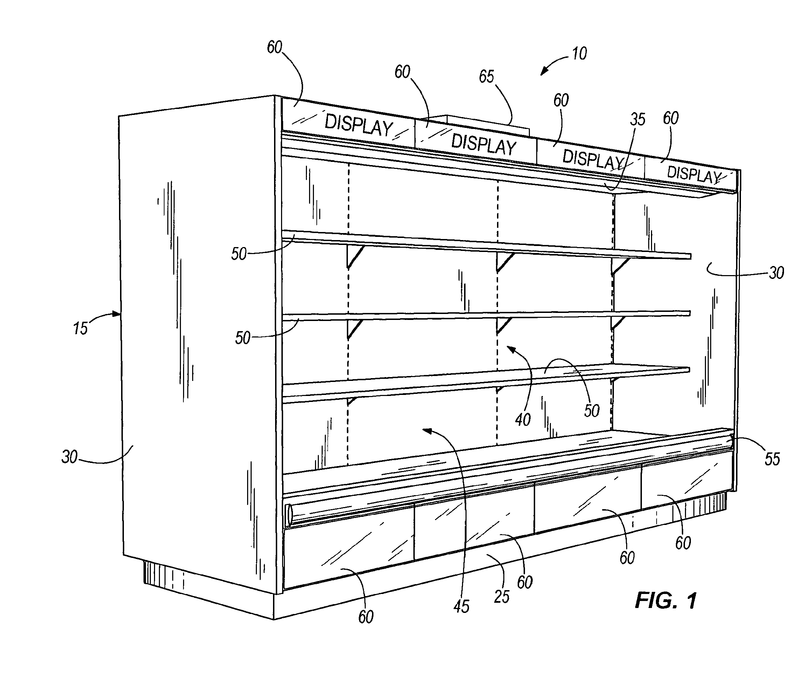

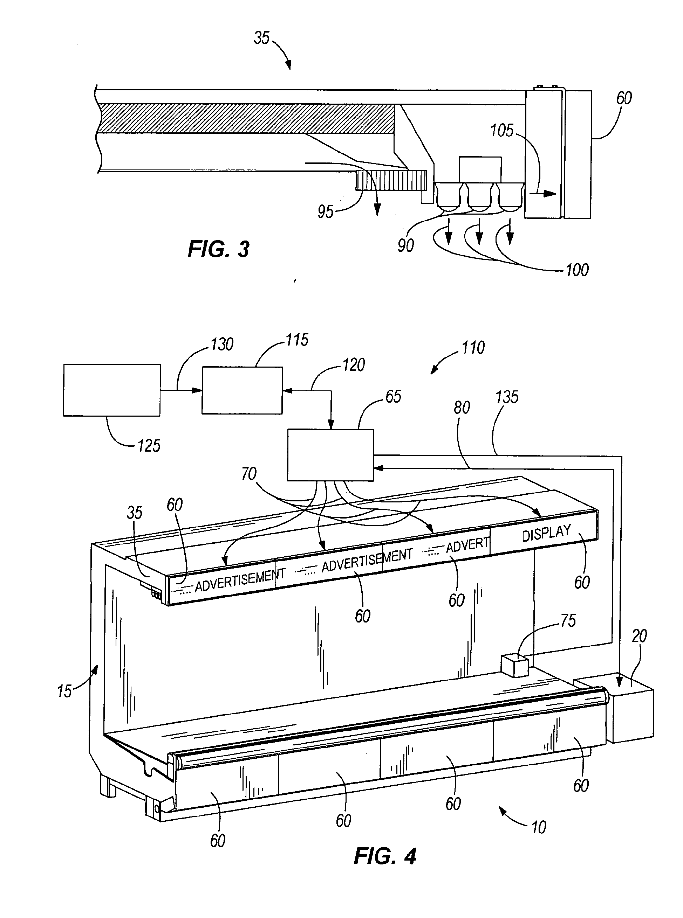

Fig. 1 illustrates a refrigerated merchandiser 10. The refrigerated merchandiser 10 includes a case 15 and at least a portion of a refrigeration system 20 (see Fig. 4) to maintain food product (not shown) at a desired temperature. The refrigeration system 20 can include a condenser and one or more fans to generate a refrigerated airflow through an evaporator to cool the food product. The refrigeration system 20 may also include other components, such as one or more compressors, a receiver, and one or more expansion valves. The refrigerated merchandiser 10 is an open front merchandiser, although other styles of refrigerated merchandisers are also considered (e.g., closed front merchandiser). The refrigerated merchandiser 10 may include a medium temperature merchandiser, in which the air temperature within the case 15 is maintained within a standard temperature range of 32°F to 41°F. Such merchandisers may include, for example, meat merchandisers, deli and dairy merchandisers, and produce merchandisers. Alternatively, the refrigerated merchandiser 10 may include a low temperature merchandiser, in which the air temperature within the case 15 is maintained at a temperature below 32°F. Such a merchandiser may include, for example, a reach-in frozen food merchandiser.

The case 15 includes a lower portion 25, walls 30, and a canopy 35. The case 15 defines a product display area 40 between the lower portion 25 and the canopy 35. The product display area 40 permits customer access to refrigerated products (not shown) through an opening 45 adjacent a front of the case 15. A plurality of shelving units 50 supports the refrigerated products within the product display area 40. The lower portion 25 includes a bumper 55 coupled to the case 15 adjacent the opening 45. The bumper 55 inhibits damage to the case 15 from impact by shopping carts or other objects.

The refrigerated merchandiser 10 further includes a plurality of graphic display panels 60 attached to the front of the merchandiser 10. Each of the graphic display panels includes advertising space (e.g., flat panels, night curtain space, etc.) visible to a consumer. In some embodiments, only a single graphic display panel 60 is attached to the case 15. In the construction of the refrigerated merchandiser 10 shown in Fig. 1, some of the plurality of graphic display panels 60 are attached to the lower portion 25 adjacent the bumper 55 and the other of the graphic display panels are attached to the canopy 35. The plurality of graphic display panels 60 extend approximately end-to-end across a substantial length of the lower portion 25 and the canopy 35.

The graphic display panels 60 on the lower portion 25 can include static advertisements such as signs, decals, transparencies, graphic panels, placards or the like. The plurality of graphic display panels 60 on the canopy 35 are configured to display video advertising that includes static video advertisements or active video advertisements. The graphic display panels 60 on the canopy 35 can include liquid crystal displays (LCDs) to display the video advertising, although other graphic display panels are also possible (e.g., plasma screens, etc.). The static advertisements and the static video advertisements can include a word or words, a picture, a combination of words and pictures, and the active video advertisements can include motion video (e.g., television advertisements, etc.). The video advertising on the canopy 35 shown in Fig. 1 illustrates an example of static advertisements which can be confined to the graphic display panel 60 on which it is displayed or spread across the plurality of graphic display panels 60. The static video advertisement on the canopy 35 can be similar to a static advertisement on the lower portion 25 in that it includes no motion within the advertisement.

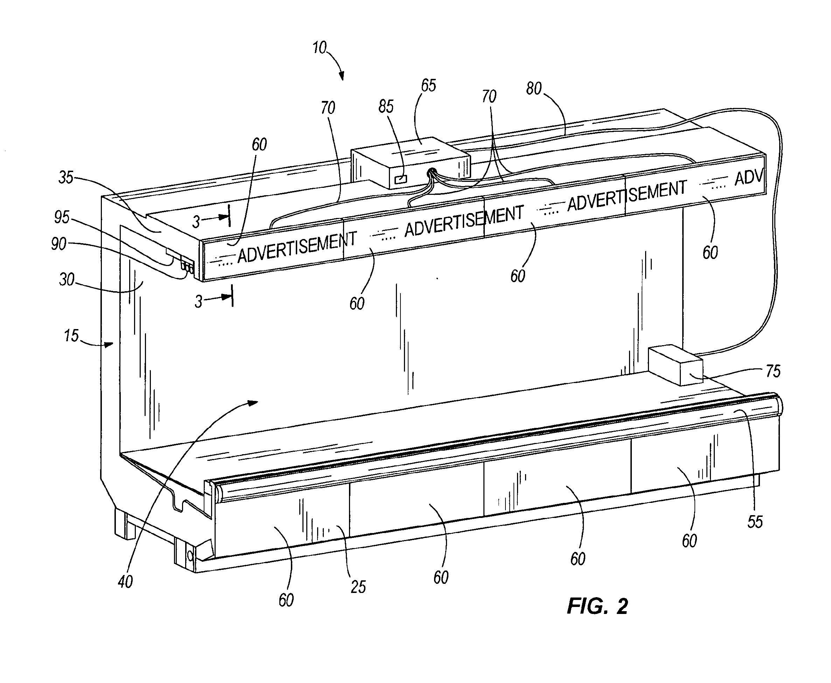

The video advertising of Fig. 2 illustrates an example of an active advertisement. The configuration of the plurality of graphic display panels 60 allow the active advertisement to "travel" across each of the plurality of graphic display panels 60. The direction of "travel" for the active advertisement can be in any direction when facing the front (e.g., left, right, up, down).

In some embodiments, the locations of the graphic display panels can vary. For example, the graphic display panels can be located on one of either the lower portion 25, the canopy 35, or elsewhere on the merchandiser. Also, it should be noted that use of the term graphic display panel incorporates any panel that is capable of displaying a static advertisement, a static video advertisement, an active video advertisement, or static video and active video advertisements.

Fig. 2 shows a controller 65 attached to a top of the case 15 and adjacent the canopy 35. The controller 65 is in electrical communication with the plurality of graphic display panels 60 on the canopy 35 through a first communication means 70. The controller 65 is operable to send a signal using the first communication means 70 to each of the plurality of graphic display panels 60 independent of the remaining of the plurality of the graphic display panels 60. The signal is indicative of video advertising to be displayed on the plurality of graphic display panels 60.

The controller 65 is in electrical communication with at least one sensor 75 adjacent the product display area 40 through a second communication means 80. The sensor 75 is operable to deliver a signal to the controller 65 indicative of a measured parameter (e.g., temperature, humidity, etc.) of the refrigerated merchandiser 10. The refrigeration system 20 is selectively adjustable by the controller 65 based on the signal. The controller is further operable to selectively activate an indicator 85 visible to one or more end users based on the signal. The indicator 85 provides notification to at least one of the end users regarding the status of the refrigerated merchandiser control hardware (e.g., temperature monitoring, fan failure, EPR or TEV valve control, defrost control, etc.). The indicator 85 can be a warning signal or other visible and/or audible alarms.

Fig. 3 illustrates the canopy 35 that includes a light source 90 coupled to the canopy 35. The light source 90 is adjacent to the plurality of graphic display panels 60 and an outlet 95 which facilitates refrigerated air flow into the product display area 40. The light source 90 is directed along a first path of illumination 100 toward the product display area 40 to illuminate the product display area 40. The light source 90 is further directed along a second path of illumination 105 toward the plurality of graphic display panels 60 to at least partially illuminate each of the plurality of graphic display panels 60. The illustrated embodiment of the light source 90 includes three fluorescent light sources. However, the light source may incorporate fewer than three light sources or more than three light sources. Additionally, other light sources are also considered (e.g., incandescent, light emitting diodes, etc.).

Fig. 4 shows a schematic representation of a control system 110 which includes the controller 65, the sensor 75, and a network service 115 in electrical communication with the controller 65 through a third communication means 120. The third communication means 120 facilitates communication between the network service 115 and the controller 65. The third communication means 120, like all of the other communication means, can include a wireless or wired connection.

The network service 115 is provided and/or accessible by at least one remote terminal 125 (e.g., computer, keyboard etc.) that is available to the end user through a fourth communication means 130. The indicator 85 sends a signal to the remote terminal 125 indicating a measured parameter of the control hardware. The indicator 85 may also selectively notify the end user at the refrigerated merchandiser 10. The end user can include one or more of a manufacturer, a retailer, an advertiser, or a third party (e.g., network administrator, etc.). The advertiser may have access to the advertising to be displayed on the graphic display panels 60 through the network service 115 and the remote terminal 125. The manufacturer has access to the refrigerated merchandiser 10 through the network service 115 and the remote terminal 125 to control the advertising and the refrigeration system 20. In other embodiments, the retailer has control over the refrigeration system 20 and/or the advertising to be displayed on the graphic display panels 60, and the manufacturer retains control over the network service 115. Still other embodiments of end user relationships exist and are considered herein.

The video advertising in Fig. 4 illustrates an example of a combination of static and active advertisements. The static advertisement (e.g., "DISPLAY") is displayed on one of the plurality of display panels 60, while the continuous and active advertisement (e.g., "ADVERTISEMENT") is displayed on the remaining of the plurality of graphic display panels 60. The number and combination of static advertisements and/or active advertisements vary depending on the exact quantity of the plurality of graphic display panels 60 available and the desire of the end user.

The refrigeration system 20 is in electrical communication with the controller 65 through a fifth communication means 135. At least a portion of the refrigeration system 20 couples to the case 15 and provides refrigerated air to the product display area 40. The refrigeration system 20 adjustably changes parameters of the product display area 40 based on signals from the controller 65.

In one method of operation, the manufacturer provides the refrigerated merchandiser 10 having a plurality of graphic display panels 60 to the retailer. The manufacturer charges a fee to at least one advertiser for the ability to advertise on the advertising space having one or more graphic display panels 60. The manufacturer charges a fee to the retailer for the refrigerated merchandiser 10. The manufacturer may reduce the fee charged to the retailer for the refrigerated merchandiser 10 based on the fee charged by the manufacturer to the advertiser. Alternatively, the manufacturer may provide the refrigerated merchandiser 10 to the retailer without charging a fee to the retailer for the refrigerated merchandiser 10. The cost of the refrigerated merchandiser 10 is passed on to the one or more advertisers who advertise on the advertising space without increasing the cost to the retailer for the refrigerated merchandiser 10.

The manufacturer is one end user with access to plurality of graphic display panels 60 on the refrigerated merchandiser 10 through the control system 110. The manufacturer may provide access to the network service 115, the controller, and the plurality of graphic display panels to additional end users. Generally, the end user delivers and/or controls the advertising through the control system 110 to be displayed on one or more of the plurality of graphic display panels 60 which may be any combination of static video and active video advertisements. In one embodiment, the additional end users include at least one advertiser. The at least one advertiser then has access to the plurality of graphic display panels 60 and may view and/or adjust the advertising displayed on the graphic display panels 60. The advertiser may also directly deliver the video advertising through the control system 110 to the plurality of display panels 60 without assistance from the manufacturer or the retailer.

In another method of operation, the retailer purchases or otherwise obtains the refrigerated merchandiser 10 from the manufacturer. The refrigerated merchandiser 10 includes a control system 110 accessible by the end user and in electrical communication with at least one graphic display panel 60. The end user sends a signal indicative of the video advertising to the controller 65 from the remote terminal 125 and through the network service 115 in order to display video advertising on the advertising space of the graphic display panel 60. When a plurality of graphic display panels 60 are attached to the case 15, the end user sends a plurality of signals indicative of the video advertising to the controller 65, which in turn delivers the video advertising to the advertising space. The video advertising can be distributed as static video advertisements or active video advertisements, or as any combination of thereof. The video advertising can be displayed continuously across the plurality of the graphic display panels 60. Additionally, the video advertising can be displayed on one of the plurality of graphic display panels 60 separately from the remaining of the plurality of graphic display panels 60. The video advertising adjustably changes according to input from the end user through the control system 110.

The merchandiser manufacturer charges the retailer a fee for the refrigerated merchandiser 10 and/or the network service 115 on the refrigerated merchandiser 10. The refrigerated merchandiser 10 supports advertising space for one or more advertisers. The retailer charges each advertiser a fee for the advertising space on the plurality of graphic display panels 60. In some embodiments, this fee can be a premium on the advertiser's traditional slotting fee. Each advertiser may choose to advertise on one or more of the plurality of graphic display panels 60 and also can be allowed access to the network service 115 in order to deliver the video advertising directly from the advertiser to the plurality of graphic display panels 60 using the control system 110.

Additionally, the network service 115 can be integrated with the controller 65 to monitor and control the refrigerated merchandiser 10 to maintain food product in the product display area 40 at a desired condition or preset parameter. The controller 65 receives a signal from the sensor 75 indicative of a measured parameter and then communicates through the network service 115 to the end user regarding the status of the refrigerated merchandiser control hardware. The controller 65 selectively activates the indicator 85 based on the signal received from the sensor 75. The controller 65 further sends a signal to the refrigeration system 20 to adjust the measured parameter based on the signal from the sensor 75. The signal indicative of an adjustment of the refrigeration system 20 can be generated by the end user through the network service 115, or automatically by a program or control mechanism within the controller 65 or network service 115.

Various features and advantages of the invention are set forth in the following claims.

## Claims

1. A refrigerated merchandiser for maintaining food product at a desired temperature, the refrigerated merchandiser comprising:
a case including a product display area adapted to support and display the food product to be visible from the front of the case;
a refrigeration system operable to supply refrigerated air to the product display area and adapted to maintain the food product at the desired temperature;
at least one graphic display panel coupled to the case;
a controller in electrical communication with the graphic display panel, wherein the controller is operable to deliver a signal to the graphic display panel, the graphic display panel operable to display video advertising based on the signal received from the controller.

2. The refrigerated merchandiser of claim 1, wherein the at least one graphic display panel includes a plurality of graphic display panels, wherein the plurality of graphic display panels extend end-to-end across a substantial length of the case.

3. The refrigerated merchandiser of claim 2, wherein the controller is operable to deliver a respective plurality of signals to the plurality of graphic display panels, the plurality of graphic display panels operable to display continuous video advertising across the plurality of graphic display panels based on the plurality of signals.

4. The refrigerated merchandiser of claim 2, wherein the controller is operable to deliver a respective plurality of signals to the plurality of graphic display panels, at least one of the plurality of graphic display panels operable to display video advertising based on one of the respective plurality of signals independent of the remaining of the plurality of graphic display panels.

5. The refrigerated merchandiser of claim 4, wherein the at least one of the plurality of graphic display panels is operable to display a static advertisement and the remaining of the plurality of graphic display panels is operable to display an active advertisement.

6. The refrigerated merchandiser of claim 1, wherein the at least one graphic display panel includes a liquid crystal display.

7. The refrigerated merchandiser of claim 1, further comprising at least one sensor in electrical communication with the controller wherein the sensor is operable to generate a signal based on a measured parameter of the refrigerated merchandiser, the controller operable to receive the signal from the sensor.

8. The refrigerated merchandiser of claim 7, wherein the controller is operable to adjust the refrigeration system based on the signal from the sensor.

9. The refrigerated merchandiser of claim 7, wherein the controller is operable to activate an indicator based on the signal from the sensor.

10. The refrigerated merchandiser of claim 1, wherein the controller is attached to the top of the case.

11. The refrigerated merchandiser of claim 1, wherein the controller electrically communicates with a network service accessible to an end user.

12. The refrigerated merchandiser of claim 1, further comprising a light source supported by the case between the product display area and the graphic display panel.

13. The refrigerated merchandiser of claim 12, wherein the light source is operable to project light along a first path of illumination directed toward the product display area adapted to brighten the food product, and wherein the light source is operable to project light along a second path of illumination directed toward the graphic display panel, at least a portion of the light along the second path of illumination operable to pass through the graphic display panel to be visible from the front of the graphic display panel.

14. The refrigerated merchandiser of claim 1, wherein the case further includes a canopy positioned above the product display area, and wherein at least one graphic display panel couples to the canopy.

15. A method of providing advertising on a refrigerated merchandiser located at a retailer, the method comprising:
providing a refrigerated merchandiser having at least one graphic display panel and a controller in electrical communication with the graphic display panel;
providing network service in electrical communication with the controller;
delivering video advertising from the network service to the controller;
delivering the video advertising from the controller to the graphic display panel; and
displaying the video advertising on the graphic display panel.

16. The method of claim 15, further comprising charging a fee to the retailer for providing the network service.

17. The method of claim 15, further comprising allowing an advertiser access to the network service.

18. The method of claim 17, further comprising delivering the video advertising from the advertiser to the network service.

19. The method of claim 18, further comprising charging a fee from the retailer to the advertiser.

20. The method of claim 19, wherein charging a fee from the retailer to the advertiser includes offering price specials based on the volume of advertising.

21. The method of claim 15, wherein displaying the video advertising includes displaying continuous video advertising across a plurality of graphic display panels.

22. The method of claim 15, wherein displaying the video advertising includes displaying video advertising on one of a plurality of graphic display panels independent of the remaining of the plurality of graphic display panels.

23. The method of claim 22, wherein displaying video advertising includes displaying a static advertisement on the one of the plurality of graphic display panels independent of the remaining of the plurality of graphic display panels displaying an active advertisement.

24. The method of claim 15, further comprising integrating the network service to monitor and control the refrigerated merchandiser.

25. A method of providing advertising on a refrigerated merchandiser located at a retailer, the method comprising:
providing a refrigerated merchandiser having advertising space;
charging a fee from the case manufacturer to at least one advertiser to advertise on the advertising space; and
displaying the advertising on the advertising space; and
reducing the purchase cost of the refrigerated merchandiser to the retailer by an amount based on the fee charged to the at least one advertiser.

26. The method of claim 25, further comprising eliminating the cost of the refrigerated merchandiser to the retailer.

27. The method of claim 25, wherein providing a refrigerated merchandiser includes providing at least one graphic display panel on the refrigerated merchandiser for displaying video advertising and a controller in electrical communication with the at least one graphic display panel.

28. The method of claim 27, further comprising providing network service in electrical communication with the controller.

29. The method of claim 28, further comprising delivering video advertising from the network service to the controller and delivering the video advertising from the controller to the at least one graphic display panel.

30. The method of claim 28, further comprising allowing an advertiser access to the network service.

31. The method of claim 30, further comprising delivering the video advertising from the advertiser to the network service.
